# EUROPÄISCHE PATENTSCHRIFT

(11) **EP 2 621 756 B1**
(45) Veröffentlichungstag und Bekanntmachung des Hinweises auf die Patenterteilung: **11.03.2015**
(21) Anmeldenummer: 11763592.0
(22) Anmeldetag: 24.09.2011
(51) Int. Cl.: B60N 2/44, B60N 2/23, B60N 2/16, B60N 2/18

(54) **VERSTELLEINRICHTUNG MIT EINEM SPINDELGETRIEBE**
ADJUSTING DEVICE HAVING A SPINDLE DRIVE
ACTIONNEUR AVEC VÉRIN À VIS SANS FIN

(30) Priorität: 28.09.2010 DE 102010041570
(43) Veröffentlichungstag der Anmeldung: 07.08.2013
(73) Patentinhaber: Brose Fahrzeugteile GmbH & Co. Kommanditgesellschaft, Coburg, 96450 Coburg (DE)
(72) Erfinder: MORROW, Michael, 96450 Coburg (DE); WAGNER, Chris, 96482 Ahorn (DE); SCHULZE, Stefan, 96472 Rödental (DE); STEINMÜLLER, Holger, 97816 Neustadt (DE)
(74) Vertreter: Schröder, Christoph
(86) Internationale Anmeldenummer: PCT/EP2011/004789
(87) Internationale Veröffentlichungsnummer: WO 2012/041468

(56) Entgegenhaltungen:
- WO-A1-01/60656
- DE-A1- 10 250 994
- DE-A1-102004 063 538
- DE-A1-102008 017 017
- DE-U1- 20 304 949
- FR-A1- 2 871 416

## Beschreibung

Die Erfindung betrifft eine Verstelleinrichtung zum schwenkbaren Verstellen zweier Fahrzeugteile zueinander nach dem Oberbegriff des Anspruchs 1.

Eine derartige Verstelleinrichtung weist eine um eine erste Schwenkachse schwenkbar an dem einen Fahrzeugteil angeordnete Spindel und ein Verstellgetriebe auf. Das Verstellgetriebe umfasst ein Getriebegehäuse und steht über eine Spindelmutter mit der Spindel in Eingriff. Eine an dem anderen Fahrzeugteil angeordnete Halterung lagert das Verstellgetriebe um eine zweite Schwenkachse schwenkbar an dem anderen Fahrzeugteil und umgreift hierzu das Getriebegehäuse des Verstellgetriebes zumindest teilweise in Umfangsrichtung um die zweite Schwenkachse.

Eine solche, ein Spindelgetriebe ausbildende Verstelleinrichtung kann vielfältig in einem Fahrzeug Verwendung finden. So kann eine Verstelleinrichtung dieser Art beispielsweise zum Einstellen der Neigung einer Rückenlehne, zum Verstellen der Neigungsstellung eines Sitzteils, zum Verstellen einer Kopfstütze, einer Lordosestütze oder anderer schwenkbar angeordneter Fahrzeugsitzteile dienen. Ebenso kann eine derartige Verstelleinrichtung aber auch an einer Fahrzeugtür oder an anderen beweglichen Teilen eines Fahrzeugs zum Einsatz kommen, um relativ zueinander verschwenkbare Bauteile in geeigneter Weise zu verstellen.

Bei einer aus der DE 102 50 994 A1 bekannten Verstelleinrichtung dieser Art ist ein Verstellgetriebe zusammen mit einem Antriebsmotor als Motor-Getriebe-Einheit über eine Lagerschale schwenkbar an einem zugeordneten Fahrzeugteil angeordnet. Das Verstellgetriebe weist eine Spindelmutter auf, die über eine Innenverzahnung mit einer Außenverzahnung einer Spindel in Eingriff steht und über eine vom Antriebsmotor angetriebene Antriebsschnecke in eine Drehbewegung versetzt werden kann. Im Betrieb rollt die Spindelmutter an der Spindel ab und bewegt sich somit längs der Spindel, um auf diese Weise die zu verstellenden Fahrzeugteile relativ zueinander zu bewegen.

Die zu verstellenden Fahrzeugteile sind schwenkbar zueinander gelagert. Dabei ist die Spindel um die erste Schwenkachse verschwenkbar an dem einen Fahrzeugteil und das Verstellgetriebe, das mit der Spindel in Eingriff steht, um die zweite Schwenkachse schwenkbar an dem anderen Fahrzeugteil gelagert, so dass sich ein Dreigelenk ergibt, bei dem die Fahrzeugteile über die verschwenkbar an dem einen Fahrzeugteil gelagerte und über das Spindelgetriebe mit dem anderen Fahrzeugteil verbundene Spindel gekoppelt sind, durch ein Verstellen des Verstellgetriebes längs der Spindel der Abstand zwischen den Verbindungspunkten der Spindel mit den Fahrzeugteilen verändert wird und somit die Fahrzeugteile relativ zueinander verschwenkt werden.

Weil beim Verschwenken der Fahrzeugteile zueinander sich auch die Winkelstellung der Spindel relativ zu den Fahrzeugteilen verändert, ist das Verstellgetriebe schwenkbar an dem zugeordneten Fahrzeugteil gelagert, so dass die Relativbewegung zwischen Fahrzeugteilen und Spindel ausgeglichen werden kann und das Verstellgetriebe entsprechend der Winkellage der Spindel relativ zu dem zugeordneten Fahrzeugteil verschwenken kann.

Die Lagerschale der DE 102 50 994 A1 umgreift ein Getriebegehäuse des Verstellgetriebes umfänglich und bildet mit teilzylindrischen Lagerflächen ein Gleitlager für das Verstellgetriebe aus. Weil die Lagerschale aus einem metallischen Werkstoff gefertigt ist, um zur Aufnahme von Crashkräften geeignet zu sein und die Festigkeitsanforderungen für die Lagerung des Verstellgetriebes zu erfüllen, ist die Halterung der DE 102 50 994 A1 in Form der Lagerschale schwer und trägt nicht unerheblich zum Gewicht der Verstelleinrichtung bei.

Eine andere Bauform einer Verstelleinrichtung mit einer derartigen, aus Metall gefertigten Halterung ist aus der DE 203 04 949 U1 bekannt.

Bei einer aus der DE 10 2006 005 499 A1 bekannten Verstelleinrichtung ist eine Halterung aus einem stranggepressten Profilstück aus Aluminium ausgebildet. Entsprechend der Strangpressrichtung sind dabei Befestigungslöcher zum Festlegen der Halterung an dem zugeordneten Fahrzeugteil parallel zur Schwenkachse des Verstellgetriebes ausgerichtet. Dies führt zu dem Nachteil, dass die Verstelleinrichtung nur durch Verschrauben parallel zur Schwenkachse an dem zugeordneten Fahrzeugteil festgelegt werden kann, also die Schraubrichtung nicht frei gewählt werden kann. Zudem kann bei der Anordnung der DE 10 2006 005 499 A1 die Verstelleinrichtung nicht als vormontierte Baugruppe zusammen mit der Halterung ausgeliefert werden, weil das Verstellgetriebe erst bei montierter Halterung an der Halterung angeordnet und mit einem an einer von der Halterung abgewandten Seite des Fahrzeugteils angeordneten Antriebsmotor verbunden werden kann.

Die WO 01/60656 A1 offenbart einen Haltebügel, der aus einem Polymermaterial hergestellt ist. Ein Verstellgetriebe ist fest an dem Bügel angeordnet, wobei der Bügel insgesamt verschwenkbar an einem Fahrzeugteil, nämlich an einer Sitzanordnung, gelagert ist.

Die DE 10 2004 063 538 A1, als Ausganspunkt der Erfindung nach Anspruch 1, beschreibt eine Verstellvorrichtung mit einer Haltevorrichtung mit zwei U-förmig gebogenen Bügeln, die ein Lagerelement eines Zahnrads verschwenkbar lagern.

Bei einer aus der FR 2 871 416 A1 bekannten Verstellvorrichtung sind an Schenkeln eines Bügels jeweils zwei Lagerflächen für ein Verstellgetriebe angeordnet, die axial zueinander versetzt sind und eine Antriebsvorrichtung verschwenkbar lagern.

Aufgabe der vorliegenden Erfindung ist es, eine Verstelleinrichtung zur Verfügung zu stellen, die leichtgewichtig und kostengünstig bei dennoch hoher Festigkeit im Betrieb ausgebildet sein kann.

Diese Aufgabe wird durch einen Gegenstand mit den Merkmalen des Anspruchs 1 gelöst.

Demnach ist vorgesehen, dass die Halterung durch einen Kunststoffhaltebügel gebildet ist.

Der Kunststoffhaltebügel kann insbesondere als einstückiges Kunststoffspritzgussteil ausgebildet sein. Der Kunststoffhaltebügel umgreift dabei das Getriebegehäuse des Verstellgetriebes zumindest abschnittsweise in Umfangsrichtung um die zweite Schwenkachse und bildet somit ein Gleitlager für das Verstellgetriebe aus. Die Reibpaarung zwischen dem Kunststoffhaltebügel und dem vorteilhafterweise ebenfalls aus Kunststoff gefertigten Getriebegehäuse des Verstellgetriebes kann hierzu so gewählt und angepasst sein, dass sich eine leichtgängige Lagerung des Verstellgetriebes an dem Kunststoffhaltebügel ergibt.

Die vorliegende Erfindung geht von dem Gedanken aus, anstelle einer schwergewichtigen Halterung aus Metall einen Kunststoffhaltebügel zur Lagerung des Verstellgetriebes an dem zugeordneten Fahrzeugteil zu verwenden. Auf diese Weise reduziert sich das Gewischt der Halterung beträchtlich, und die Halterung kann als Kunststoffhaltebügel in kostengünstiger Weise beispielsweise als Kunststoffspritzgussteil in großer Stückzahl hergestellt werden. Durch einstückige Ausbildung des Kunststoffhaltebügels und gegebenenfalls daran vorgesehene Versteifungsmittel kann die Festigkeit des Kunststoffhaltebügels dabei so eingestellt werden, dass sie sicher und zuverlässig auch die in einem Crashfall auftretenden Belastungskräfte aufnehmen kann.

Der Kunststoffhaltebügel ist in Umfangsrichtung um die zweite Schwenkachse gesehen abschnittsweise offen, und das Verstellgetriebe kann in einer Einführrichtung senkrecht zur zweiten Schwenkachse an den Haltebügel angesetzt werden. Der Kunststoffhaltebügel ist dazu U-förmig mit zwei seitlichen Schenkeln und einer die Schenkel verbindenden Basis ausgebildet, wobei der Kunststoffhaltebügel abschnittsweise elastisch ist, so dass das Verstellgetriebe in die U-förmige Aufnahme des Kunststoffhaltebügels eingesetzt und lagernd mit dem Kunststoffhaltebügel in Engriff gebracht werden kann. An den Schenkeln des Kunststoffhaltebügels und gegebenenfalls auch an der Basis sind hierbei Lagerflächen ausgebildet, die in ihrer Formgebung Abschnitten einer zur zweiten Schwenkachse (des Verstellgetriebes) konzentrischen Zylindermantelfläche entsprechen und somit teilzylindrisch ausgebildet sind und an denen das Getriebegehäuse des Verstellgetriebes mit seiner in geeigneter Weise geformten Außenwandung gleitend anliegt.

Zur Montage des Verstellgetriebes an dem Kunststoffhaltebügel wird das Verstellgetriebe von der offenen Seite des Kunststoffhaltebügels in den Kunststoffhaltebügel eingesetzt und rastet dabei zwischen den Schenkeln des Kunststoffhaltebügels ein, wenn das Getriebegehäuse des Verstellgetriebes an den Lagerflächen der Schenkel und/oder der Basis zu liegen kommt. Durch die zumindest abschnittsweise elastische Ausbildung des Kunststoffhaltebügels kann die Montage des Verstellgetriebes an dem Kunststoffhaltebügel ohne großen Kraftaufwand in einfacher Weise erfolgen.

Dadurch, dass der Kunststoffhaltebügel in Umfangsrichtung um die zweite Schwenkachse gesehen abschnittsweise offen ausgebildet ist, kann das Verstellgetriebe in einer Richtung senkrecht zur zweiten Schwenkachse in den Haltebügel eingesetzt werden, wobei das Einsetzen vorzugsweise clipsend erfolgt, indem das Verstellgetriebe zwischen die Schenkel des Kunststoffhaltebügels gedrückt wird und mit seinem Getriebegehäuse in Anlage mit den Lagerflächen des Kunststoffhaltebügels gelangt. Das Verstellgetriebe wird dabei aufgrund einer zumindest geringen elastischen Vorspannung der Schenkel des Kunststoffhaltebügels zumindest weitestgehend spielfrei an dem Kunststoffhaltebügel gehalten.

Um einen Kunststoffhaltebügel hoher Festigkeit bereitzustellen, der auch die in einem Crashfall wirkenden Belastungskräfte aufnehmen kann, weist der Kunststoffhaltebügel vorteilhafterweise einen oder mehrere sich U-förmig erstreckende, in Richtung der zweiten Schwenkachse zueinander versetzte Profilabschnitte mit radial zur zweiten Schwenkachse nach außen vorstehenden, in Umfangsrichtung um die zweite Schwenkachse verlaufenden Stegen auf. Durch diese Profilabschnitte wird die Steifigkeit des Kunststoffhaltebügels gezielt eingestellt und erhöht, wobei vorteilhafterweise zwei Profilabschnitte verwendet werden, die über mindestens einen Verbindungssteg und/oder mindestens einen Flächenabschnitt miteinander verbunden sind. Durch die in Umfangsrichtung um die zweite Schwenkachse verlaufenden, radial nach außen vorstehenden Stege der Profilabschnitte wird die Formstabilität des Kunststoffhaltebügels insbesondere in einer Ebene senkrecht zur zweiten Schwenkachse erhöht, so dass beispielsweise bei Verwendung an einem Fahrzeugsitz, bei dem in einem Crashfall Belastungskräfte vorzugsweise in dieser Ebene wirken, die Belastungskräfte sicher und zuverlässig aufgefangen werden können.

Der Kunststoffhaltebügel weist an seinen Schenkeln zwei Lagerflächen auf, die sich diametral gegenüberstehen und ein Gleitlager zum Lagern des Verstellgetriebes bereitstellen. In einer Weiterbildung kann jedoch auch vorgesehen sein, dass der Kunststoffhaltebügel vier Lagerflächen zum Lagern des Verstellgetriebes aufweist, von denen zwei paarweise zum Lagern des Verstellgetriebes in einer ersten Einsetzposition und zwei zum Lagern des Verstellgetriebes in einer zweiten Einsetzposition ausgebildet sind. Jeweils zwei Lagerflächen können hierbei entlang der Einführrichtung (senkrecht zur zweiten Schwenkachse) zueinander versetzt an einem Schenkel des Kunststoffhaltebügels angeordnet sein, wobei jede Lagerfläche an einem Schenkel einer zugeordneten Lagerfläche an dem anderen Schenkel diametral gegenüberliegt. Die paarweise einander zugeordneten Lagerflächen dienen zur Lagerung des Verstellgetriebes in unterschiedlichen Einsetzpositionen und ermöglichen beispielsweise, dass das Verstellgetriebe mit einer Antriebsschnecke unterhalb der Spindelmutter oder oberhalb der Spindelmutter in den Kunststoffhaltebügel eingesetzt werden kann.

Um den Kunststoffhaltebügel an dem zugeordneten Fahrzeugteil festzulegen, ist vorzugsweise ein Haltewinkel zur Verbindung mit dem zugeordneten Fahrzeugteil vorgesehen. Dieser Haltewinkel ist beispielsweise über eine oder mehrere Schraubverbindungen mit dem Kunststoffhaltebügel verbunden, wobei hierzu der Kunststoffhaltebügel eine der Anzahl der Schraubverbindungen entsprechende Anzahl von Befestigungsbohrungen aufweist, die sich längs in einer zur zweiten Schwenkachse senkrechten Ebene erstrecken, also im Wesentlichen senkrecht zur zweiten Schwenkachse gerichtet sind. Die Befestigungsbohrungen können hierbei beispielsweise als Sackbohrungen ausgeführt sein, wobei die Schraubverbindungen mit einem selbstschneidenden Gewinde ausgeführt sind und vonseiten des Haltewinkels hergestellt werden.

Die zur Herstellung der Schraubverbindung dienenden Schrauben greifen in den Kunststoffhaltebügel ein und können auf diese Weise als abschnittsweise Armierung (auch als Bewehrung bezeichnet) des Kunststoffhaltebügels zur Erhöhung der Stabilität insbesondere in Querrichtung quer zur zweiten Schwenkachse in Längsrichtung der Spindel dienen.

Die Schraubverbindung kann dadurch hergestellt werden, dass die Schrauben von der dem Kunststoffhaltebügel abgewandten Seite des Haltewinkels in den Kunststoffhaltebügel eingeschraubt werden. Denkbar ist aber auch, die Schrauben andersherum von Seiten des Kunststoffhaltebügels einzuschrauben und durch entsprechende Aussparungen am Haltewinkel hindurch mit geeigneten Muttern in Verbindung zu bringen.

Vorteilhaft kann in diesem Zusammenhang auch sein, ein oder mehrere Schrauben in den Kunststoffhaltebügel einzuspritzen und somit fest in den Kunststoffhaltebügel einzuformen. Hierzu kann auch eine Gewindestange verwendet werden, die beispielsweise der Form des Kunststoffhaltebügels entsprechend U-förmig gebogen und in den Kunststoffhaltebügel eingespritzt ist, so dass die Gewindestange als sich in Umfangsrichtung erstreckende Armierung des Kunststoffhaltebügels dient.

In einer alternativen Ausgestaltung kann der Kunststoffhaltebügel auch mit dem Haltewinkel verclipst sein, wobei auch denkbar ist, den Haltewinkel einerseits zu verclipsen und andererseits mit Schraubverbindungen an dem Kunststoffhaltebügel zu fixieren. So kann beispielsweise ein Schenkel eines U-förmigen Kunststoffhaltebügels mit dem Haltewinkel verclipst sein, während der andere Schenkel des U-förmigen Kunststoffhaltebügels mit dem Haltewinkel verschraubt ist.

Unter Verclipsen wird hier die Herstellung einer formschlüssigen Verbindung unter Verwendung geeigneter Rastelemente verstanden, die eine clipsende Verbindung zwischen dem Haltewinkel und dem Kunststoffhaltebügel herstellen.

Über den Haltewinkel wird der in Umfangsrichtung einseitig offene Kunststoffhaltebügel geschlossen. Über den Haltewinkel wird damit der Kunststoffhaltebügel komplettiert und die Elastizität aus dem Kunststoffhaltebügel genommen, so dass das Verstellgetriebe zwischen den Schenkeln des Kunststoffhaltebügels sicher gehalten, dabei aber schwenkbar gelagert ist.

Über den Haltewinkel wird weiterhin der Kunststoffhaltebügel an dem zugeordneten Fahrzeugteil festgelegt, wobei die Verstelleinrichtung mit der Spindel, dem Verstellgetriebe und dem Kunststoffhaltebügel sowie dem am Kunststoffhaltebügel angeordneten Haltewinkel als vormontierte Einheit hergestellt und ausgeliefert werden kann, um als Einheit an den zu verstellenden Fahrzeugteilen, beispielsweise Bauteilen eines Fahrzeugsitzes, montiert zu werden.

Um den Haltewinkel in leichter Weise im Rahmen einer automatisierten Fertigung an dem Kunststoffhaltebügel in gewünschter Position anordnen zu können, kann an einem dem Haltewinkel zugewandten Abschnitt des Kunststoffhaltebügels mindestens ein Zentrierzapfen vorgesehen sein, der vom Kunststoffhaltebügel in Richtung des Haltewinkels vorspringt und in eine Zentrieröffnung des Haltewinkels eingreift. Der Zentrierzapfen dient zum Zentrieren des Haltewinkels relativ zu dem Kunststoffhaltebügel und wird zum Festlegen des Haltewinkels an dem Kunststoffhaltebügel mit der zugeordneten Zentrieröffnung des Haltewinkels in Eingriff gebracht, so dass bei in Eingriff befindlichem Zentrierzapfen davon ausgegangen werden kann, dass sich der Haltewinkel und der Kunststoffhaltebügel in der gewünschten Lagebeziehung zueinander befinden.

Der Kunststoffhaltebügel umgreift als Halterung für das Verstellgetriebe das Getriebegehäuse des Verstellgetriebes umfänglich. Das Verstellgetriebe ist somit innerhalb des Kunststoffhaltebügels angeordnet und zumindest abschnittsweise in Umfangsrichtung um die zweite Schwenkachse von dem Kunststoffhaltebügel bedeckt. Um den Eingriff des Verstellgetriebes mit der Spindel herzustellen, weist daher der Kunststoffhaltebügel an seiner Umfangsfläche Aussparungen zum Durchführen der Spindel auf, die als Langlöcher ausgebildet und entweder umfänglich geschlossen oder umfänglich offen geformt sind. Bei letzterer Variante sind die Langlöcher insbesondere zu der Seite hin, zu der auch der Kunststoffhaltebügel offen ausgebildet ist, offen, so dass das Verstellgetriebe mit daran angeordneter Spindel in eine zur zweiten Schwenkachse senkrechten Einführrichtung an den Kunststoffhaltebügel angesetzt und die Spindel von der offenen Seite her in die Aussparungen eingeführt werden kann.

Vorteilhafterweise ist an dem Getriebegehäuse mindestens ein Führungszapfen ausgebildet, der in radialer Richtung zur zweiten Schwenkachse von dem Getriebegehäuse vorsteht und in eine Aussparung an dem Kunststoffhaltebügel eingreift.

Der Führungszapfen kann hierbei dreierlei Funktionen erfüllen.

Zum einen kann der Führungszapfen als axiale Sicherung des Verstellgetriebes an dem Kunststoffhaltebügel dienen, so dass das Verstellgetriebe nicht ohne weiteres in Richtung der zweiten Schwenkachse aus dem Kunststoffhaltebügel rutschen kann, wenn das Verstellgetriebe an den Kunststoffhaltebügel angesetzt ist.

Zum Zweiten kann der Führungszapfen als Führung für das Verstellgetriebe im Betrieb der Verstelleinrichtung bei einem Verschwenken des Verstellgetriebes relativ zu dem Kunststoffhaltebügel dienen, indem im Betrieb der Verstelleinrichtung der Führungszapfen in der zugeordneten Aussparung gleitet und eine gleitende Führung für das Verstellgetriebe bereitstellt.

Zum Dritten kann der Führungszapfen auch eine Führung beim Ansetzen des Verstellgetriebes an den Kunststoffhaltewinkel zur Verfügung stellen, indem beim Ansetzen des Verstellgetriebes an den Kunststoffhaltebügel der Führungszapfen in die zugeordnete Aussparung eingesetzt wird und beim Einsetzen entlang der Aussparung gleitet, um auf diese Weise den Einsetzvorgang des Verstellgetriebes zu führen.

Vorzugsweise sind zwei Führungszapfen an dem Getriebegehäuse vorgesehen, die sich diametral gegenüberstehen und in unterschiedliche Aussparungen des Kunststoffhaltebügels eingreifen. Die Führungszapfen können hierbei vorzugsweise als Vierkantprofil ausgebildet sein, um auf diese Weise eine sichere Axialsicherung, eine Führung beim Verschwenken im Betrieb der Verstelleinrichtung und eine Führung beim Einsetzen des Verstellgetriebes in den Kunststoffhaltebügel zur Verfügung zu stellen.

An dem Führungszapfen kann auch eine Öffnung zur Durchführung der Spindel angeordnet sein, so dass über die Führungszapfen die Spindel in das Verstellgetriebe hineingeführt und in Eingriff mit der durch das Getriebegehäuse eingefassten Spindelmutter gebracht wird.

Das Verstellgetriebe ist vorzugsweise mit einem Antriebsmotor verbunden und zusammen mit dem Antriebsmotor schwenkbar. Der Antriebsmotor kann hierzu mit seinem Motorgehäuse an das Getriebegehäuse angeflanscht und mittels Schrauben oder Nieten verbunden sein. Denkbar ist aber auch, den Antriebsmotor in eine geeignete Motorhalterung einzuclipsen und entsprechend formschlüssig an dem Getriebegehäuse zu halten.

Das Verstellgetriebe bildet somit mit dem Antriebsmotor eine Motor-Getriebe-Einheit, die über den Kunststoffhaltebügel verschwenkbar an dem zugeordneten Fahrzeugteil gelagert ist. Denkbar ist hierbei auch, nicht das Verstellgetriebe unmittelbar, sondern den Antriebsmotor verschwenkbar über den Kunststoffhaltebügel zu lagern. Entscheidend kommt es in diesem Zusammenhang darauf an, dass das Verstellgetriebe (gegebenenfalls indirekt über den Antriebsmotor) verschwenkbar an dem zugeordneten Fahrzeugteil gelagert ist.

Der der Erfindung zugrunde liegende Gedanke soll nachfolgend anhand der in den Figuren dargestellten Ausführungsbeispiele näher erläutert werden. Es zeigen:
- Fig. 1: eine schematische Ansicht eines Sitzrahmens eines Fahrzeugsitzes mit einer daran angeordneten Verstelleinrichtung in Form eines Spindelgetriebes;
- Fig. 2: eine gesonderte Ansicht der Verstelleinrichtung;
- Fig. 3: eine Explosionsansicht der Verstelleinrichtung;
- Fig. 4: eine gesonderte Ansicht eines Kunststoffhaltebügels und einer Motor-Getriebe-Einheit der Verstelleinrichtung;
- Fig. 5A - 5C: Ansichten der Verstelleinrichtung bei der Montage;
- Fig. 6A - 6C: Ansichten einer modifizierten Ausführungsform der Verstelleinrichtung bei der Montage und
- Fig. 7A, 7B: Ansichten einer wiederum modifizierten Ausführungsform der Verstelleinrichtung.

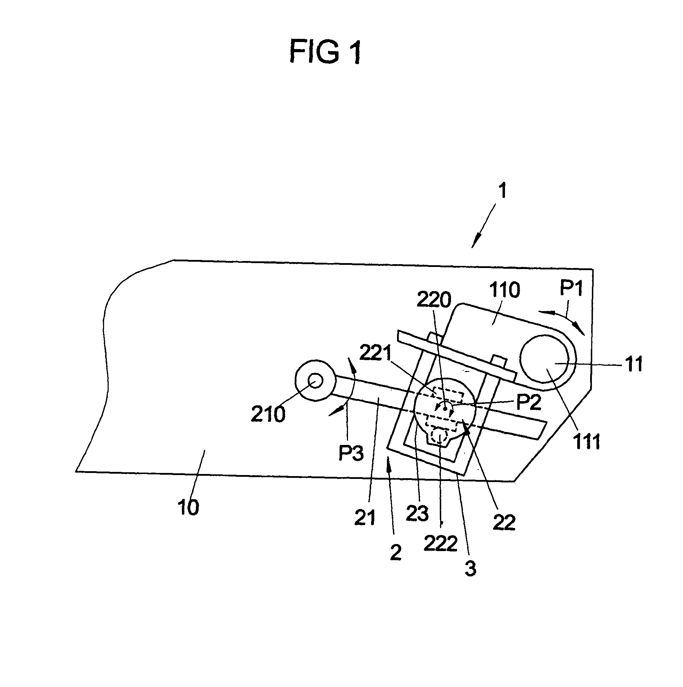

Fig. 1 zeigt in einer schematischen Seitenansicht einen Sitzrahmen 10 eines Fahrzeugsitzes mit einer daran angeordneten Verstelleinrichtung 2. Die Verstelleinrichtung 2 ist als Spindelgetriebe mit einer um eine erste Schwenkachse 210 an dem Sitzrahmen 10 angeordneten Spindel 21 und einem mit einer Welle 11 verbundenen Verstellgetriebe 22 ausgebildet und kann beispielsweise zur Neigungseinstellung eines mit der Welle gekoppelten Sitzteils zum Zwecke der Sitzhöhen- oder Sitzneigungseinstellung des Fahrzeugsitzes 1 dienen.

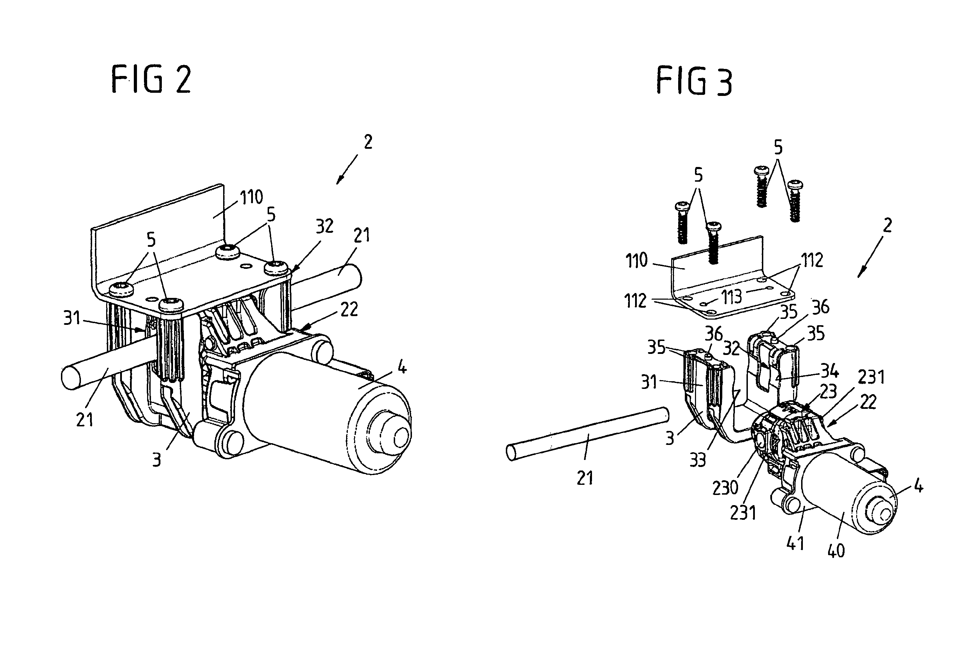

Das Verstellgetriebe 22 ist durch eine über eine Innenverzahnung mit einer Außenverzahnung der Spindel 21 in Eingriff stehende Spindelmutter 221 und eine über einen Antriebsmotor 4 (siehe z.B. Fig. 2) angetriebene Antriebsschnecke 222, die in eine Außenverzahnung der Spindelmutter 221 eingreift, gebildet.

Das Verstellgetriebe 22 ist zumindest teilweise von einem Getriebegehäuse 23 eingefasst, das über eine Halterung in Form eines Kunststoffhaltebügels 3 verschwenkbar mit der Welle 11 verbunden ist. Der Kunststoffhaltebügel 3 ist hierzu mit einem aus Metall, beispielsweise Stahl gefertigten Haltewinkel 110 verbunden, der wiederum an der Welle festgelegt, beispielsweise verschweißt ist.

Das Getriebegehäuse 23 ist vorzugsweise aus Kunststoff ausgebildet, wobei der Kunststoffhaltebügel 3 und das Getriebegehäuse 23 in ihrer Reibpaarung so zueinander eingestellt sein können, dass sich eine vorteilhafte Gleitlagerung mit geringer Reibung ergibt.

Die ein erstes Fahrzeugteil verwirklichende Welle 11 ist um die Schwenkachse 111 schwenkbar, während das Verstellgetriebe 22 um eine zweite Schwenkachse 220 verschwenkbar an dem Kunststoffhaltebügel 3 angeordnet ist. Die Spindel 21 wiederum ist über die Schwenkachse 210 schwenkbar an dem ein zweites Fahrzeugteil verwirklichenden Sitzrahmen 10 angeordnet, wobei sich die Schwenkachse 210 senkrecht zur Längserstreckungsrichtung der Spindel 21 erstreckt und die Schwenkachsen 111, 210, 220 zumindest im Wesentlichen parallel zueinander gerichtet sind, so dass sich ein Dreigelenk ergibt.

Im Betrieb der Verstelleinrichtung 2 bewegt die Antriebsschnecke 222, angetrieben durch den Antriebsmotor 4 (siehe Fig. 2), die Spindelmutter 221 und versetzt diese in eine Drehbewegung, so dass sie über den Eingriff mit der Außenverzahnung der Spindel 21 an der Spindel 21 abrollt und längs entlang der Spindel 21 verstellt wird. Auf diese Weise wird der Abstand zwischen dem Verstellgetriebe 22 und der Schwenkachse 210, über die die Spindel 21 verschwenkbar an dem Sitzrahmen 10 angeordnet ist, verändert, so dass die Welle 11 über den zwischen der Schwenkachse 220 des Verstellgetriebes 22 und der Schwenkachse 111 der Welle 11 gebildeten Hebelarm verschwenkt wird.

Um hierbei die geänderte Winkellage der Spindel 21, die sich im Betrieb in Richtung des Pfeils P3 um die Schwenkachse 210 bewegt, auszugleichen, schwenkt auch das Verstellgetriebe 22 innerhalb des Kunststoffhaltebügels 3 in Richtung des Pfeils P2. Über den haltenden Umgriff des Kunststoffhaltebügels 3 werden die Verstellkräfte dabei auf den Haltewinkel 110 und über den Haltewinkel 110 auf die Welle 11 übertragen, so dass die Welle 11 um ihre Schwenkachse 111 in Richtung des Pfeils P1 verschwenkt.

Ansichten eines ersten konkreten Ausführungsbeispiels der Verstelleinrichtung 2 zeigen Fig. 2 bis 4. Die Verstelleinrichtung 2 weist einen Antriebmotor 4 auf, der über einen an einem Motorgehäuse 40 angeordneten Flanschabschnitt 41 mit dem Getriebegehäuse 23 des Verstellgetriebes 22 verbunden ist und zusammen mit dem Verstellgetriebe 22 eine Motor-Getriebe-Einheit ausbildet. Das Verstellgetriebe 22 ist über das Getriebegehäuse 23 in dem Kunststoffhaltebügel 3 angeordnet, wobei der Kunststoffhaltebügel 3 Lagerflächen 33, 34 aufweist, die entsprechend von Abschnitten einer zur Schwenkachse 222 konzentrischen Mantelfläche eines Zylinders geformt sind und mit dem zumindest abschnittsweise ebenfalls gekrümmt geformten Getriebegehäuse 23 in Kontakt stehen. Der Kunststoffhaltebügel 3 bildet somit ein Gleitlager für das Getriebegehäuse 23 aus, das das Verstellgetriebe 22 um die Schwenkachse 220 verschwenkbar mit dem Haltewinkel 110 verbindet.

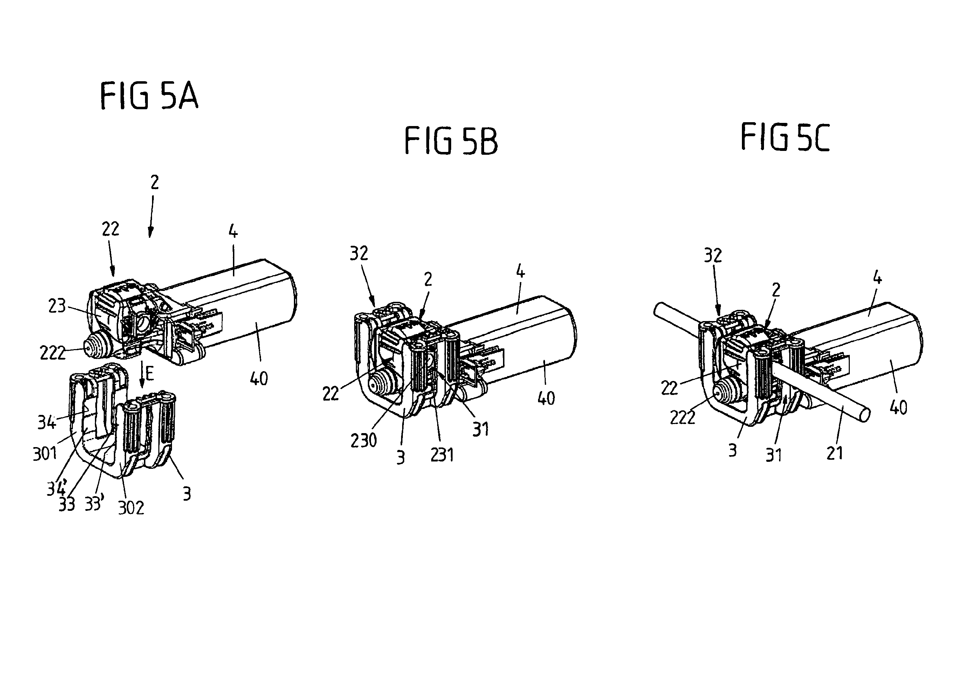

Der Kunststoffhaltebügel 3 ist aus Kunststoff beispielsweise als Kunststoffspritzgussteil ausgebildet. Der Kunststoffbügel 3 ist dabei zumindest so elastisch, dass das Verstellgetriebe 22 mit dem Getriebegehäuse 23 in eine Einführrichtung E senkrecht zur Schwenkachse 220 von oben in den Kunststoffhaltebügel 3 eingesetzt werden kann (siehe auch Fig. 5A), um das Getriebegehäuse 23 in Anlage mit den Lagerflächen 33, 34 zu bringen.

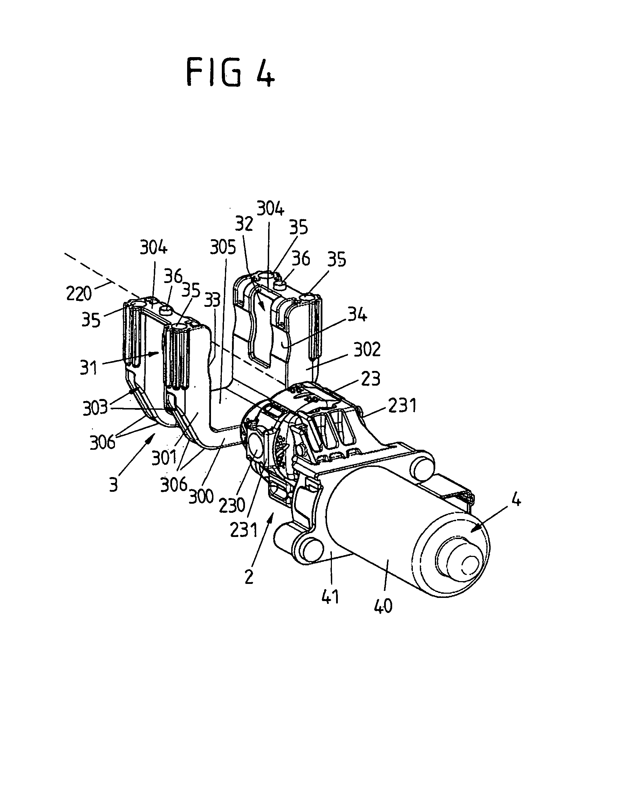

Wie in Fig. 4 dargestellt, ist der Kunststoffhaltebügel 3 im Wesentlichen U-förmig ausgebildet mit seitlichen Schenkeln 301, 302 und einer die Schenkel 301, 302 verbindenden Basis 300. Der U-förmige Kunststoffhaltebügel 3 ist dabei durch zwei U-förmig gebogene, entlang der Schwenkachse 220 zueinander versetzte Profilabschnitte 303 gebildet, die jeweils in Umfangsrichtung um die Schwenkachse 220 verlaufen und radial nach außen vorstehende Stege 306 aufweisen.

Über die Profilabschnitte 303, die auf Seiten der Basis 300 durch einen Flächenabschnitt 305 und am oberen Ende der Schenkel 301, 302 durch jeweils einen Steg 304 miteinander verbunden sind, wird ein formstabiles Kunststoffteil geschaffen, das ein Einsetzen des Verstellgetriebes 23 in die Einführrichtung E ermöglicht, im Betrieb aber eine solche Festigkeit aufweist, dass es die insbesondere in einem Crashfall wirkenden Belastungskräfte sicher und zuverlässig aufnehmen kann.

Der Kunststoffhaltebügel 3 ist, wie in Fig. 2 und 3 dargestellt, mit dem Haltewinkel 110 verbunden, indem der Haltewinkel 110 den U-förmigen Kunststoffhaltebügel 3 an seiner umfänglich offenen, in den Ansichten oberen Seite schließt und über Schrauben 5, die Befestigungsöffnungen 112 des Haltewinkels 110 durchgreifen und in Befestigungsbohrungen 35 an den Schenkeln 301, 302 des Kunststoffhaltebügels 3 eingreifen, an dem Kunststoffhaltebügel 3 fixiert ist. Die Befestigungsbohrungen 35 sind hierbei als Sackbohrungen ausgeführt und lediglich auf ihrer zum Haltewinkel 110 weisenden Seite offen, wobei die über die Schrauben 5 hergestellten Schraubenverbindungen mit einem selbstschneidenden Gewinde hergestellt werden.

Durch die Ausführung der Befestigungsbohrungen 35 als Sackbohrungen ist die Stabilität des Kunststoffhaltebügels 3 weiter erhöht. Denkbar ist aber auch, die Befestigungsbohrungen 35 als durchgehende, beidseitig offene Bohrungen auszuführen.

Der Kunststoffhaltebügel 3 weist an den Schenkeln 301, 302 angeordnete seitliche Aussparungen 31, 32 auf, durch die in montiertem Zustand (siehe Fig. 2) die Spindel 21 hindurch greift und in Eingriff mit dem Verstellgetriebe 22 ist. Die Aussparungen 31, 32 sind in axialer Richtung zur Schwenkachse 220 gesehen zwischen den Profilabschnitten 303 angeordnet und als Langlöcher ausgebildet, so dass die Spindel 21 im Betrieb der Verstelleinrichtung 2 relativ zum Kunststoffhaltebügel 3 verschwenken kann, ohne in Kontakt mit Kunststoffhaltebügel 3 zu gelangen.

An dem Getriebegehäuse 23 des Verstellgetriebes 2 sind diametral zur Schwenkachse 220 gegenüberliegend zwei Führungszapfen 231 angeordnet, die in montiertem Zustand der Verstelleinrichtung 2 in den Aussparungen 31, 32 zu liegen kommen. Diese Führungszapfen 231 sind nach Art eines Vierkants ausgebildet und dienen dazu, das Getriebegehäuse 23 im Betrieb der Verstelleinrichtung 2 bei einem Verschwenken um die Schwenkachse 220 an den Aussparungen 31, 32 zu führen. Zudem stellen die Führungszapfen 231 eine Axialsicherung für das Verstellgetriebe 22 dar, die verhindert, dass das Verstellgetriebe 22 mit seinem Getriebegehäuse 23 in montiertem Zustand in axialer Richtung entlang der Schwenkachse 220 aus dem Kunststoffhaltebügel 3 rutschen kann. Weiterhin dienen die Führungszapfen 231 auch der Erleichterung der Montage, wie nachfolgend noch erläutert werden wird.

An den die Profilabschnitte 303 miteinander verbindenden Verbindungsstegen 304 an den oberen Enden der Schenkel 301, 302 sind jeweils in etwa mittig zwischen den Befestigungsbohrungen 35 Zentrierzapfen 36 angeordnet, die von der Stirnseite der Schenkel 301, 302 in Richtung des Haltewinkels 110 vorstehen und in montiertem Zustand in Zentrieröffnungen 113 am Haltewinkel 110 eingreifen. Diese Zentrierzapfen 36 dienen der Montageerleichterung beim Verbinden des Haltewinkels 110 mit dem Kunststoffhaltebügel 3 und legen die Position des Haltewinkels 110 relativ zum Kunststoffhaltebügel 3 fest.

Der Ablauf bei der Montage der Verstelleinrichtung 2 ist in Fig. 5A bis 5C dargestellt. Fig. 5A zeigt hier zunächst den Zustand vor Ansetzen des Verstellgetriebes 22 an den Kunststoffhaltebügel 3. Fig. 5B zeigt den Zustand bei an dem Kunststoffhaltebügel 3 angesetztem Verstellgetriebe 22. Fig. 5C zeigt den Zustand bei an das Verstellgetriebe 22 angesetzter Spindel 21.

Zur Montage wird das Verstellgetriebe 22 mit dem daran angeordneten Antriebsmotor 4 als Motor-Getriebe-Einheit an den Kunststoffhaltebügel 3 in die Einfüllrichtung E eingesetzt, indem das Getriebegehäuse 23 des Verstellgetriebe 22 von oben in die zwischen den Schenkeln 301, 302 des Kunststoffhaltebügels 3 geschaffene U-förmige Aufnahme gedrückt wird, bis das Getriebegehäuse 23 in Eingriff mit den Lagerflächen 33, 34 schnappt. Der Kunststoffhaltebügel 3 ist hierzu zumindest so elastische ausgebildet, dass die Schenkel 301, 302 zumindest um eine geringe Wegstrecke nach außen nachgeben können und so das Verstellgetriebe 22 mit dem Getriebegehäuse 23 zwischen die Schenkel 301, 302 des Kunststoffhaltebügels 3 gedrückt werden kann.

Die Führungszapfen 231 des Getriebegehäuses 23 werden beim Ansetzen des Getriebegehäuses 23 an den Kunststoffhaltebügel 3 in die Aussparungen 31, 32 der Schenkel 301, 302 eingesetzt und führen auf diese Weise den Einführvorgang des Getriebegehäuses 23 in die U-förmige Aufnahme des Kunststoffhaltebügels 3.

In angesetztem Zustand, dargestellt in Fig. 5B, befindet sich das Getriebegehäuse 23 des Verstellgetriebes 22 zwischen den Schenkeln 301, 302 in Anlage mit den Lagerflächen 33, 34 und wird, wie in Fig. 5C dargestellt, in Eingriff mit der Spindel 21 gebracht, indem diese an die Öffnung 230 an einem der Führungszapfen 231 angesetzt und, vorteilhafterweise durch Betätigen des Antriebsmotors 4, in das Verstellgetriebe 22 eingezogen wird. Fig. 5C zeigt die Spindel 21 in Eingriff mit dem Verstellgetriebe 22.

Nachdem die Spindel 21 in das Verstellgetriebe 22 eingeführt worden ist, wird der Kunststoffhaltebügel 3, wie in Fig. 2 dargestellt, mit dem Haltewinkel 110 verbunden, indem die Schrauben 5 durch die Befestigungsöffnung 112 des Haltewinkels 110 in die Befestigungsbohrungen 35 gewindeschneidend eingeschraubt werden. Durch die Verbindung des Haltewinkels 110 mit dem Kunststoffhaltebügel 3 wird der Kunststoffhaltebügel 3 fixiert und die zur Montage erforderliche Elastizität aus dem Kunststoffhaltebügel 3 genommen, so dass insbesondere die Schenkel 301, 302 des Kunststoffhaltebügels 3 in ihrer Lage zueinander fixiert sind und das Verstellgetriebe 22 über das Getriebegehäuse 23 sicher und fest mit dem Haltewinkel 110 und über den Haltewinkel 110 mit der Welle 11 (siehe Fig. 1) verbinden. In dem mit dem Haltewinkel 110 verbundenen Zustand kann der Kunststoffhaltebügel 3 sicher und zuverlässig die in einem Crashfall wirkenden Belastungskräfte aufnehmen.

Das Ausführungsbeispiel gemäß Fig. 5A bis 5C ist geringfügig gegenüber dem Ausführungsbeispiel nach Fig. 2 bis 4 modifiziert dadurch, dass an den Schenkeln 301, 302 des Kunststoffhaltebügels 3 jeweils zwei Lagerflächen 33, 33', 34, 34', also an dem Kunststoffhaltebügel 3 insgesamt vier Lagerflächen 33, 33', 34, 34' ausgebildet sind. Die Lagerflächen 33, 33' bzw. 34, 34' an je einem Schenkel 301, 302 sind herbei entlang der Einführrichtung E zueinander versetzt, wobei jeder Lagerfläche 33, 33', 34, 34' jeweils eine diametral gegenüberliegende Lagerfläche 33, 33', 34, 34' an dem anderen Schenkel 301, 302 zugeordnet ist.

Das erste Lagerflächenpaar der Lagerflächen 33, 34 und das zweite Lagerflächenpaar der Lagerflächen 33', 34' bilden hierbei zwei unterschiedliche Gleitlagerungen für das Verstellgetriebe 22 in unterschiedlichen Einsetzpositionen.

Mittels des ersten Lagerflächenpaares der Lagerflächen 33, 34 kann, wie in Fig. 5B und 5C dargestellt, das Verstellgetriebe 22 in einer Position an dem Kunststoffhaltebügel 3 angeordnet werden, in der die Antriebsschnecke 222 unterhalb der Spindelmutter 221 angeordnet ist, also an der vom Haltewinkel 110 abgewandten Seite der Spindel 21.

Mittels des zweiten Lagerflächenpaares der Lagerflächen 33', 34' hingegen kann das Verstellgetriebe 22 in einer Position an dem Kunststoffhaltebügel 3 angeordnet werden, in der die Antriebsschnecke 222 oberhalb der Spindelmutter 221 angeordnet ist, also an der dem Haltewinkel 110 zugewandten Seite der Spindel 21.

Für unterschiedliche Anordnungen des Verstellgetriebes 22 kann damit ein einheitlicher Kunststoffhaltebügel 3 verwendet werden.

Der Kunststoffhaltebügel 3 kann, unabhängig davon, ob er mit lediglich zwei Lagerflächen 33, 34, bzw. 33', 34' oder mit insgesamt vier Lagerflächen 33, 33', 34, 34' ausgebildet wird, mit ein und demselben Werkzeug hergestellt werden, wobei beispielsweise zum Kunststoffspritzgießen abhängig von der Anzahl und Position der Lagerflächen 33, 33', 34, 34' unterschiedliche Schieber verwendet werden.

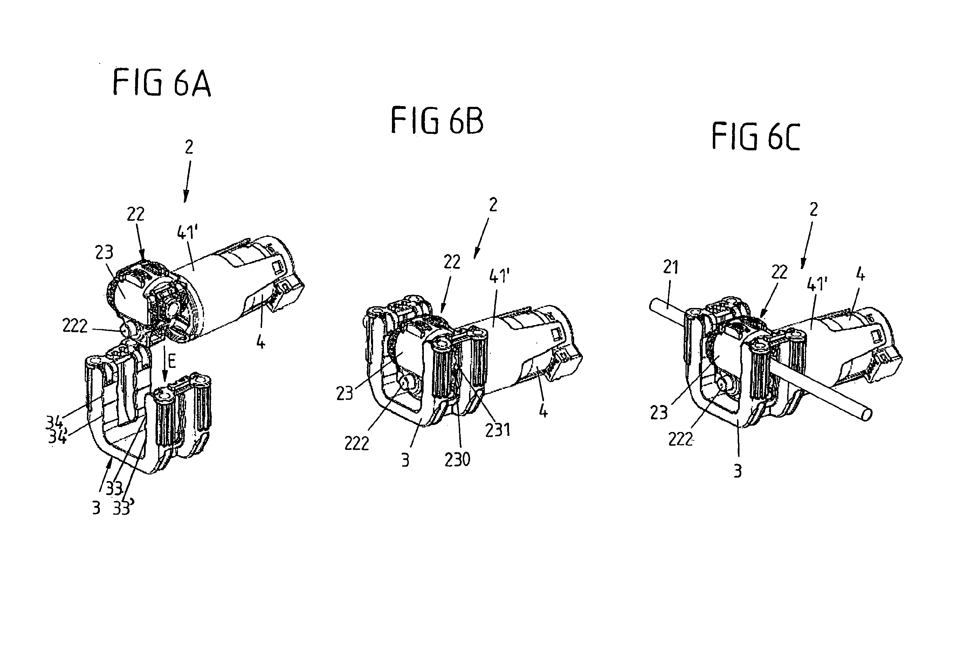

Fig. 6A bis 6C zeigen eine modifizierte Ausführungsform einer Verstelleinrichtung 2, die sich insbesondere dadurch von der vorangehend geschilderten Verstelleinrichtung unterscheidet, dass der Antriebsmotor 4 nicht an das Getriebegehäuse 23 angeflanscht, sondern über eine Motorhalterung 41' an das Getriebegehäuse 23 angeclipst und somit formschlüssig mit dem Getriebegehäuse 23 verbunden ist. Der Antriebsmotor 4 kann hierzu in Richtung der Erstreckungsrichtung der Antriebsschnecke 222 in die Motorhalterung 41' eingesetzt werden und verrastet in eingesetztem Zustand mit der Motorhalterung 41'.

Die Funktionsweise der Verstelleinrichtung 2 und auch der Montageablauf sind ansonsten identisch wie vorangehend geschildert. Entsprechend sind auch in den Figuren für die Bezeichnung von Bauteilen gleicher Funktion gleiche Bezugszeichen verwendet worden.

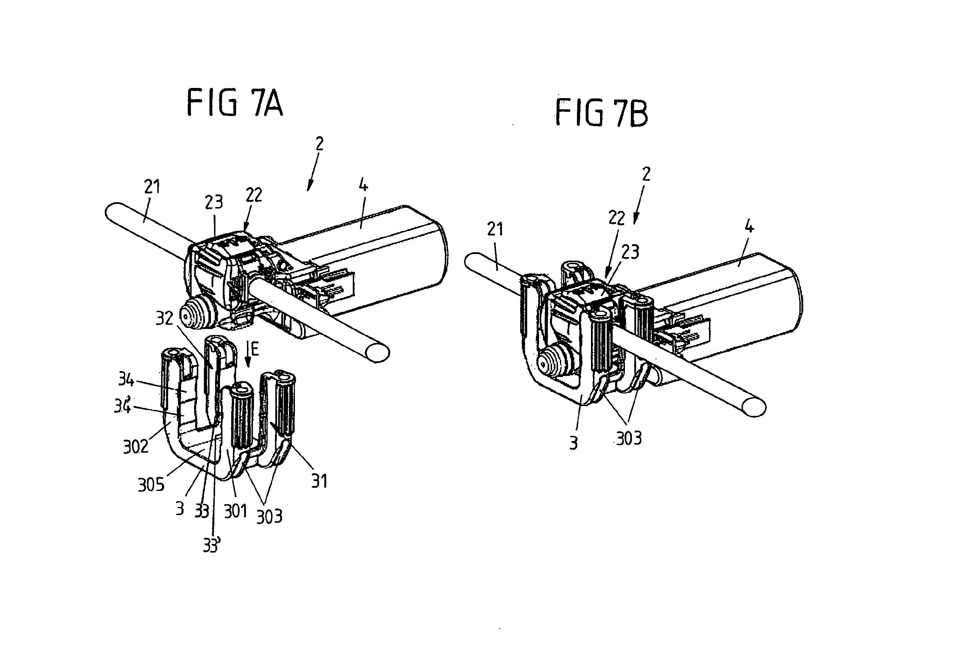

Fig. 7A und 7B zeigen ein wiederum modifiziertes Ausführungsbeispiel, das sich von der Ausgestaltung gemäß Fig. 2 bis 4 dadurch unterscheidet, dass der Kunststoffhaltebügel 3 bei dem Ausführungsbeispiel gemäß Fig. 7A und 7B mit Aussparungen 31, 32 ausgebildet ist, die zu den Stirnseiten der Schenkel 301, 302 des U-förmigen Kunststoffhaltebügels 3 nicht verschlossen, sondern offen sind. Stege 304, wie sie bei dem Ausführungsbeispiel gemäß Fig. 2 bis 4 vorgesehen sind, entfallen hier. Dies hat den Vorteil, dass das Verstellgetriebe 22 zusammen mit daran angeordneter Spindel 21 in die Einführrichtung E an den Kunststoffhaltebügel 3 angesetzt und somit die Spindel 21 vor dem Ansetzen des Verstellgetriebes 22 an den Kunststoffhaltebügel 3 in Eingriff mit dem Verstellgetriebe 22 gebracht werden kann.

Nachdem das Verstellgetriebe 22 an den Kunststoffhaltebügel 3 angesetzt worden ist, wie in Fig. 7B dargestellt, wird der Kunststoffhaltebügel 3 wiederum mit dem Haltewinkel 110 verbunden, wobei über den Haltewinkel 110 auch die Profilabschnitte 303 des Kunststoffhaltebügels 3 an ihren oberen, dem Haltewinkel 110 zugewandten Enden zueinander fixiert werden und so der Kunststoffhaltebügel 3 die erforderliche Stabilität und Festigkeit erhält.

Der der Erfindung zugrunde liegende Gedanke ist nicht auf die vorangehend geschilderten Ausführungsbeispiele beschränkt, sondern lässt sich auch bei gänzlich anders gearteten Ausführungsformen verwirklichen, soweit sie die in den Ansprüchen definierten Merkmale enthalten.

Insbesondere sind auch Einsatzmöglichkeiten einer Verstelleinrichtung der geschilderten Art unabhängig von einem Fahrzeugsitz zum Verstellen anderer Fahrzeugteile denkbar und vorteilhaft.

Der Haltewinkel ist nicht notwendigerweise mit dem Kunststoffhaltebügel verschraubt, sondern kann beispielsweise auch mit dem Kunststoffhaltebügel verclipst werden, indem geeignete Rastelemente am Haltewinkel und Kunststoffhaltebügel formschlüssig miteinander in Eingriff gebracht werden. Denkbar ist auch eine Kombination, indem beispielsweise ein Schenkel des Kunststoffhaltebügels verschraubt und der andere Schenkel des Kunststoffhaltebügels mit dem Haltewinkel verclipst wird.

### Bezugszeichenliste

- 1: Fahrzeugsitz
- 10: Sitzrahmen
- 11: Welle
- 110: Haltewinkel
- 111: Schwenkachse
- 112: Befestigungsöffnung
- 113: Zentrieröffnung
- 2: Verstelleinrichtung
- 21: Spindel
- 210: Schwenkachse
- 22: Verstellgetriebe
- 220: Schwenkachse
- 221: Spindelmutter
- 222: Antriebsschnecke
- 23: Getriebegehäuse
- 230: Öffnung
- 231: Führungszapfen
- 3: Kunststoffhaltebügel
- 300: Basis
- 301, 302: Schenkel
- 303: Profilabschnitte
- 304: Verbindungssteg
- 305: Flächenabschnitt
- 306: Stege
- 31, 32: Aussparung
- 33, 33', 34, 34': Lagerfläche
- 35: Befestigungsbohrungen
- 36: Zentrierzapfen
- 4: Antriebsmotor
- 40: Motorgehäuse
- 41: Flanschabschnitt
- 41': Motorhalterung
- 5: Schrauben
- E: Einführrichtung
- P1, P2, P3: Pfeil

## Patentansprüche

1. Verstelleinrichtung zum schwenkbaren Verstellen zweier Fahrzeugteile zueinander, mit
- einer um eine erste Schwenkachse (210) schwenkbar an dem einen Fahrzeugteil angeordneten Spindel (21),
- einem Verstellgetriebe, das ein Getriebegehäuse (23) aufweist und über eine Spindelmutter (221) mit der Spindel in Eingriff steht, und
- einer an dem anderen Fahrzeugteil angeordneten Halterung (3), die das Verstellgetriebe um eine zweite Schwenkachse (220) schwenkbar an dem anderen Fahrzeugteil lagert und hierzu das Getriebegehäuse des Verstellgetriebes zumindest teilweise in Umfangsrichtung um die zweite Schwenkachse umgreift,
**dadurch gekennzeichnet,**
**dass** die Halterung durch einen Kunststoffhaltebügel (3) gebildet ist, der U-förmig mit zwei seitlichen Schenkeln (301, 302) und einer die Schenkel (301, 302) verbindenden Basis (300) ausgebildet ist, wobei der Kunststoffhaltebügel (3) an seinen Schenkeln (301, 302) zwei Lagerflächen (33, 33', 34, 34') aufweist, die sich diametral zur zweiten Schwenkachse (220) gegenüberstehen und ein Gleitlager zum Lagern des Verstellgetriebes (22) bereitstellen, indem die Lagerflächen (33, 33', 34, 34') in ihrer Formgebung Abschnitten einer zur zweiten Schwenkachse (220) konzentrischen Zylindermantelfläche entsprechen und an den Lagerflächen (33, 33', 34, 34') das Getriebegehäuse (23) des Verstellgetriebes (22) gleitend anliegt, so dass das Verstellgetriebe (22) zwischen den Schenkeln (301, 302) gehalten, dabei aber schwenkbar gelagert ist.

2. Verstelleinrichtung nach einem der vorangehenden Ansprüche, **dadurch gekennzeichnet, dass** der Kunststoffhaltebügel (3) abschnittsweise elastisch ausgebildet ist.

3. Verstelleinrichtung nach einem der vorangehenden Ansprüche, **dadurch gekennzeichnet, dass** der Kunststoffhaltebügel (3) zwei sich U-förmig erstreckende, in Richtung der zweiten Schwenkachse (220) zueinander versetzte Profilabschnitte (303) mit radial zur zweiten Schwenkachse (220) nach außen vorstehenden, in Umfangsrichtung um die zweite Schwenkachse (220) verlaufenden Stegen (306) aufweist.

4. Verstelleinrichtung nach Anspruch 3, **dadurch gekennzeichnet, dass** die Profilabschnitte (303) über mindestens einen Verbindungssteg (304) und/oder mindestens einen Flächenabschnitt (305) miteinander verbunden sind.

5. Verstelleinrichtung nach einem der vorangehenden Ansprüche, **dadurch gekennzeichnet, dass** der Kunststoffhaltebügel (3) vier Lagerflächen (33, 33', 34, 34') zum Lagern des Verstellgetriebes (22) aufweist, von denen zwei zum Lagern des Verstellgetriebes (22) in einer ersten Einsetzposition und zwei zum Lagern des Verstellgetriebes (22) in einer zweiten Einsetzposition ausgebildet sind.

6. Verstelleinrichtung nach einem der vorangehenden Ansprüche, **dadurch gekennzeichnet, dass** der Kunststoffhaltebügel (3) mit einem Haltewinkel (110) zur Verbindung mit dem anderen Fahrzeugteil (11) verbunden ist.

7. Verstelleinrichtung nach Anspruch 6, **dadurch gekennzeichnet, dass** der Kunststoffhaltebügel (3) mit dem Haltewinkel (110) über eine Schraubverbindung verbunden ist und hierzu mindestens eine Befestigungsbohrung (35) aufweist, die sich längs in einer zur zweiten Schwenkachse (220) senkrechten Ebene erstreckt.

8. Verstelleinrichtung nach Anspruch 7, **dadurch gekennzeichnet, dass** die mindestens eine Befestigungsbohrung (35) als Sackbohrung und die Schraubverbindung mit einem selbstschneidenden Gewinde ausgeführt ist.

9. Verstelleinrichtung nach einem der Ansprüche 6 bis 8, **dadurch gekennzeichnet, dass** mindestens eine Schraube (5) der Schraubverbindung eine Armierung des Kunststoffhaltebügels (3) bereitstellt.

10. Verstelleinrichtung nach einem der Ansprüche 6 bis 9, **dadurch gekennzeichnet, dass** der Kunststoffhaltebügel (3) mit dem Haltewinkel (110) verclipst ist.

11. Verstelleinrichtung nach einem der Ansprüche 6 bis 10, **dadurch gekennzeichnet, dass** der Haltewinkel (110) den Kunststoffhaltebügel (3) in Umfangsrichtung um die zweite Schwenkachse (220) schließt.

12. Verstelleinrichtung nach einem der Ansprüche 6 bis 11, **dadurch gekennzeichnet, dass** an einem dem Haltewinkel (110) zugewandten Abschnitt (304) des Kunststoffhaltebügels (3) mindestens ein in eine Zentrieröffnung (113) des Haltewinkels (110) eingreifender Zentrierzapfen (36) zum Zentrieren des Haltewinkels (110) relativ zu dem Kunststoffhaltebügel (3) angeordnet ist.

13. Verstelleinrichtung nach einem der vorangehenden Ansprüche, **dadurch gekennzeichnet, dass** an dem Getriebegehäuse (23) mindestens ein Führungszapfen (231) ausgebildet ist, der in radialer Richtung zur zweiten Schwenkachse (220) von dem Getriebegehäuse (23) vorsteht und in eine Aussparung (31, 32) an dem Kunststoffhaltebügel (3) eingreift.

14. Verstelleinrichtung nach Anspruch 13, **dadurch gekennzeichnet, dass** der Führungszapfen (231) als Vierkantprofil ausgebildet ist.

15. Verstelleinrichtung nach Anspruch 13 oder 14, **dadurch gekennzeichnet, dass** der Führungszapfen (231) eine Öffnung (230) zur Durchführung der Spindel (21) aufweist.

## Claims

1. An adjusting means for pivotally adjusting two vehicle parts relative to each other, comprising
- a spindle (21) pivotally arranged at the one vehicle part about a first pivot axis (210),
- an adjusting gear unit which includes a gear unit housing (23) and is in engagement with the spindle via a spindle nut (221), and
- a holder (3) arranged at the other vehicle part, which pivotally supports the adjusting gear unit on the other vehicle part about a second pivot axis (220) and for this purpose at least partly encloses the gear unit housing of the adjusting gear unit in circumferential direction about the second pivot axis,
**characterized in**
**that** the holder is formed by a plastic retaining clip (3) which is formed U-shaped with two lateral legs (301, 302) and a base (300) connecting the legs (301, 302), wherein the plastic retaining clip (3) includes two bearing surfaces (33, 33', 34, 34') at its legs (301, 302), which are diametrically opposed to the second pivot axis (220) and provide a plain bearing for supporting the adjusting gear unit (22), in that in terms of shape the bearing surfaces (33, 33', 34, 34') correspond to portions of a cylinder shell surface concentric to the second pivot axis (220) and the gear unit housing (23) of the adjusting gear unit (22) slidingly rests against the bearing surfaces (33, 33', 34, 34'), so that the adjusting gear unit (22) is held, but pivotally mounted between the legs (301, 302).

2. The adjusting means according to any of the preceding claims, **characterized in that** the plastic retaining clip (3) is formed partly elastic.

3. The adjusting means according to any of the preceding claims, **characterized in that** the plastic retaining clip (3) includes two profile portions (303) extending in a U-shaped manner, offset to each other in direction of the second pivot axis (220), with webs (306) protruding to the outside radially to the second pivot axis (220), which extend in circumferential direction about the second pivot axis (220).

4. The adjusting means according to claim 3, **characterized in that** the profile portions (303) are connected with each other via at least one connecting web (304) and/or at least one surface portion (305).

5. The adjusting means according to any of the preceding claims, **characterized in that** the plastic retaining clip (3) includes four bearing surfaces (33, 33', 34, 34') for supporting the adjusting gear unit (22), two of which are formed for supporting the adjusting gear unit (22) in a first insertion position and two are formed for supporting the adjusting gear unit (22) in a second insertion position.

6. The adjusting means according to any of the preceding claims, **characterized in that** the plastic retaining clip (3) is connected with a holding bracket (110) for connection with the other vehicle part (11).

7. The adjusting means according to claim 6, **characterized in that** the plastic retaining clip (3) is connected with the holding bracket (110) via a screw connection and for this purpose includes at least one mounting bore (35) which extends longitudinally in a plane vertical to the second pivot axis (220).

8. The adjusting means according to claim 7, **characterized in that** the at least one mounting bore (35) is designed as blind hole and the screw connection is designed with a self-cutting thread.

9. The adjusting means according to any of claims 6 to 8, **characterized in that** at least one screw (5) of the screw connection provides an armor of the plastic retaining clip (3).

10. The adjusting means according to any of claims 6 to 9, **characterized in that** the plastic retaining clip (3) is clipped to the holding bracket (110).

11. The adjusting means according to any of claims 6 to 10, **characterized in that** the holding bracket (110) closes the plastic retaining clip (3) in circumferential direction about the second pivot axis (220).

12. The adjusting means according to any of claims 6 to 11, **characterized in that** at a portion (304) of the plastic retaining clip (3) facing the holding bracket (110) at least one centering pin (36) engaging into a centering opening (113) of the holding bracket (110) is arranged for centering the holding bracket (110) relative to the plastic retaining clip (3).

13. The adjusting means according to any of the preceding claims, **characterized in that** at the gear unit housing (23) at least one guide pin (231) is formed, which protrudes from the gear unit housing (23) in radial direction to the second pivot axis (220) and engages into a cutout (31, 32) at the plastic retaining clip (3).

14. The adjusting means according to claim 13, **characterized in that** the guide pin (231) is formed as square profile.

15. The adjusting means according to claim 13 or 14, **characterized in that** the guide pin (231) includes an opening (230) for leading through the spindle (21).

## Revendications

1. Dispositif de réglage pour le réglage pivotant de deux parties de véhicule l'une par rapport à l'autre, avec
- une broche (21) agencée de manière pivotante autour d'un premier axe de pivotement (210) sur une partie de véhicule,
- un mécanisme ajustable qui comprend un boîtier de mécanisme (23) et est en engagement par un écrou de broche (221) avec la broche et
- un support (3) agencé sur l'autre partie de véhicule qui loge le mécanisme ajustable de manière pivotante autour d'un second axe de pivotement (220) sur l'autre partie de véhicule et entoure à cet effet le boîtier de mécanisme du mécanisme ajustable au moins en partie dans le sens périphérique autour du second axe de pivotement,
**caractérisé en ce que**
le support est formé par un étrier de retenue en plastique (3) qui est réalisé en forme de U avec deux branches latérales (301, 302) et une base (300) reliant les branches (301, 302), l'étrier de retenue en plastique (3) présentant sur ses branches (301, 302) deux surfaces de palier (33, 33', 34, 34') qui se trouvent diamétralement en regard par rapport au second axe de pivotement (220) et mettent à disposition un palier lisse pour le logement du mécanisme ajustable (22) **en ce que** les surfaces de palier (33, 33', 34, 34') correspondent dans leur forme à des sections d'une surface enveloppe cylindrique concentrique au second axe de pivotement (220) et le boîtier de mécanisme (23) du mécanisme ajustable (22) repose par glissement sur les surfaces de palier (33, 33', 34, 34') de sorte que le mécanisme ajustable (22) soit maintenu entre les branches (301, 302) mais soit logé de manière pivotante.

2. Dispositif de réglage selon l'une quelconque des revendications précédentes, **caractérisé en ce que** l'étrier de retenue en plastique (3) est réalisé par section de manière élastique.

3. Dispositif de réglage selon l'une quelconque des revendications précédentes, **caractérisé en ce que** l'étrier de retenue en plastique (3) présente deux sections profilées (303) s'étendant en U, décalées l'une par rapport à l'autre en direction du second axe de pivotement (220) avec des nervures (306) s'étendant dans le sens périphérique autour du second axe de pivotement (220), dépassant radialement vers l'extérieur par rapport au second axe de pivotement (220).

4. Dispositif de réglage selon la revendication 3, **caractérisé en ce que** les sections profilées (303) sont reliées entre elles par au moins une nervure de liaison (304) et/ou au moins une section de surface (305).

5. Dispositif de réglage selon l'une quelconque des revendications précédentes, **caractérisé en ce que** l'étrier de retenue en plastique (3) présente quatre surfaces de palier (33, 33', 34, 34') pour le logement du mécanisme ajustable (22), dont deux sont réalisées pour le logement du mécanisme ajustable (22) dans une première position d'utilisation et deux pour le logement du mécanisme ajustable (22) dans une seconde position d'utilisation.

6. Dispositif de réglage selon l'une quelconque des revendications précédentes, **caractérisé en ce que** l'étrier de retenue en plastique (3) est relié à un cornière de retenue (110) pour la liaison avec l'autre partie de véhicule (11).

7. Dispositif de réglage selon la revendication 6, **caractérisé en ce que** l'étrier de retenue en plastique (3) est relié au cornière de retenue (110) par un vissage et présente à cet effet au moins un perçage de fixation (35) qui s'étend longitudinalement dans un plan perpendiculaire au second axe de pivotement (220).

8. Dispositif de réglage selon la revendication 7, **caractérisé en ce que** l'au moins un perçage de fixation (35) est réalisé comme un trou borgne et le vissage est réalisé avec un filetage autotaraudant.

9. Dispositif de réglage selon l'une quelconque des revendications 6 à 8, **caractérisé en ce qu'**au moins une vis (5) du vissage met à disposition une armature de l'étrier de retenue en plastique (3).

10. Dispositif de réglage selon l'une quelconque des revendications 6 à 9, **caractérisé en ce que** l'étrier de retenue en plastique (3) est clipsé au cornière de retenue (110).

11. Dispositif de réglage selon l'une quelconque des revendications 6 à 10, **caractérisé en ce que** le cornière de retenue (110) ferme l'étrier de retenue en plastique (3) dans le sens périphérique autour du second axe de pivotement (220).

12. Dispositif de réglage selon l'une quelconque des revendications 6 à 11, **caractérisé en ce qu'**au moins un tenon de centrage (36) s'engageant dans une ouverture de centrage (113) du cornière de retenue (110) est agencé pour le centrage du cornière de retenue (110) par rapport à l'étrier de retenue en plastique (3) sur une section (304) tournée vers le cornière de retenue (110) de l'étrier de retenue en plastique (3).

13. Dispositif de réglage selon l'une quelconque des revendications précédentes, **caractérisé en ce qu'**au moins un tenon de guidage (231) est réalisé sur le boîtier de mécanisme (23), lequel dépasse dans le sens radial par rapport au second axe de pivotement (220) du boîtier de mécanisme (23) et s'engage dans un évidement (31, 32) sur l'étrier de retenue en plastique (3).

14. Dispositif de réglage selon la revendication 13, **caractérisé en ce que** le tenon de guidage (231) est réalisé comme un profil carré.

15. Dispositif de réglage selon la revendication 13 ou 14, **caractérisé en ce que** le tenon de guidage (231) présente une ouverture (230) pour le passage de la broche (21).
